# EUROPEAN PATENT SPECIFICATION

(11) **EP 2 282 553 B1**
(45) Date of publication and mention of the grant of the patent: **01.07.2020**
(21) Application number: 10157372.3
(22) Date of filing: 23.03.2010
(51) Int. Cl.: H04R 1/02, H04R 1/28

(54) **Bass sound amplifying enclosure, woofer including the same, and electronic device including the woofer**
Basstonverstärkungshülle, Woofer damit und elektronische Vorrichtung mit dem Woofer
Enceinte amplifiant le volume des basses, haut-parleur de graves l'incluant et dispositif électronique incluant le haut-parleur de graves

(30) Priority: 27.07.2009 KR 20090068411
(43) Date of publication of application: 09.02.2011
(73) Proprietor: Samsung Electronics Co., Ltd., Suwon-si, Gyeonggi-do, 443-742 (KR)
(72) Inventor: Lee, Gyeong-tae, Gyeonggi-do (KR); Kim, Jong-bae, Seoul (KR)
(74) Representative: Appleyard Lees IP LLP

(56) References cited:
- EP-A1- 1 677 571
- WO-A1-2004/107804
- CN-A- 101 198 196
- US-A- 5 821 471
- US-A1- 2001 024 508
- US-A1- 2008 219 489
- BERKHOFF A P: "IMPEDANCE ANALYSIS OF SUBWOOFER SYSTEMS", JOURNAL OF THE AUDIO ENGINEERING SOCIETY, AUDIO ENGINEERING SOCIETY, NEW YORK, NY, US, vol. 42, no. 1/02, 1 January 1994 (1994-01-01), pages 4-14, XP000555913, ISSN: 1549-4950
- "EXTENDING BASS", ELECTRONICS WORLD, NEXUS MEDIA COMMUNICATIONS, SWANLEY, KENT, GB, vol. 100, no. 1695, 1 February 1994 (1994-02-01), pages 100-105, XP000426418, ISSN: 0959-8332

## Description

### BACKGROUND OF THE INVENTION

### 1. Field of the Invention

Apparatuses consistent with the present invention relate to a bass sound amplifying enclosure, a woofer including the bass sound amplifying enclosure, and an electronic device including the woofer.

### 2. Description of the Related Art

Electronic devices, such as digital TVs, have recently become thinner owing to the development of flat display panel technology. It may be important to determine types and locations of sound reproduction speakers in order to maintain the thinness of these electronic devices. A bar type speaker installed in a lower bezel below a flat display panel prevents digital TVs from becoming thicker. However, the bar type speaker has a low sound pressure level in a bass sound bandwidth of 100 ~ 300 Hz and thus the sound quality thereof is unsatisfactory.

CN 101 198 196 A and US 2008/219489 A1 describe a speaker enclosure widening the lower frequency range of the sound emitted. The enclosure comprises a rear chamber, a speaker unit chamber and a front chamber arranged side by side to each other separated by barrier ribs with connection apertures for air flow between the speaker unit chamber and the front chamber or the rear chamber, respectively. Sound is emitted from the front chamber to the outside via an opening in a side wall of the enclosure.

WO2004/107804 A1 describes mobile terminals including micro-speaker assemblies. The micro-speaker assembly includes a micro-speaker positioned in a housing. A low frequency back tuning volume is adjacent a front face of the micro-speaker and a high frequency forward tuning volume is adjacent a back face of the micro-speaker. A passageway extends from the forward tuning volume to an opening in the housing.

EP 1 677 571 A1 describes a sound box for a portable computer. The sound box comprises between two plates a front space opened to the outside, a speaker unit chamber, a rear chamber with a duct to the outside arranged side by side to each other and separated by barrier ribs with connection apertures for air flow between the speaker unit chamber and the front space or the rear chamber, respectively. Bass sound is emitted from the side of the speaker unit that is in communication with the front space; higher frequency components of sound are emitted through sound holes in the speaker unit at the side that is in communication with the rear chamber and the duct. The speaker unit is arranged in the speaker unit chamber such that the two sides of the speaker unit face the two plates, respectively.

### SUMMARY OF THE INVENTION

The present invention provides a thin bass sound amplifying enclosure suitable for a slim type electronic device, a woofer including the thin bass sound amplifying enclosure, and an electronic device including the woofer.

### BRIEF DESCRIPTION OF THE DRAWINGS

The above and/or other aspects of the present invention will become more apparent by describing in detail exemplary embodiments thereof with reference to the attached drawings in which:
FIG. 1 is an exploded perspective view of a woofer according to an exemplary embodiment of the present invention;
FIG. 2 is a cross-sectional view of the woofer of FIG. 1 taken along a line II-II according to an exemplary embodiment of the present invention;
FIG. 3 is an exploded perspective view of a woofer according to another exemplary embodiment of the present invention;
FIG. 4 is a cross-sectional view of the woofer of FIG. 3 taken along a line IV-IV according to another exemplary embodiment of the present invention;
FIG. 5A is a plan view of an inner side surface of a first plate included in an enclosure according to an exemplary embodiment of the present invention;
FIG. 5B is a plan view of an inner side surface of a second plate included in an enclosure according to an exemplary embodiment of the present invention;
FIG. 6 is a perspective view of an electronic device according to an exemplary embodiment of the present invention; and
FIG. 7 is a graph of a sound pressure level of the electronic device of FIG. 6 according to an exemplary embodiment of the present invention.

### DETAILED DESCRIPTION OF THE INVENTION

Hereinafter, the present invention will be described in detail by explaining exemplary embodiments of the invention with reference to the attached drawings.

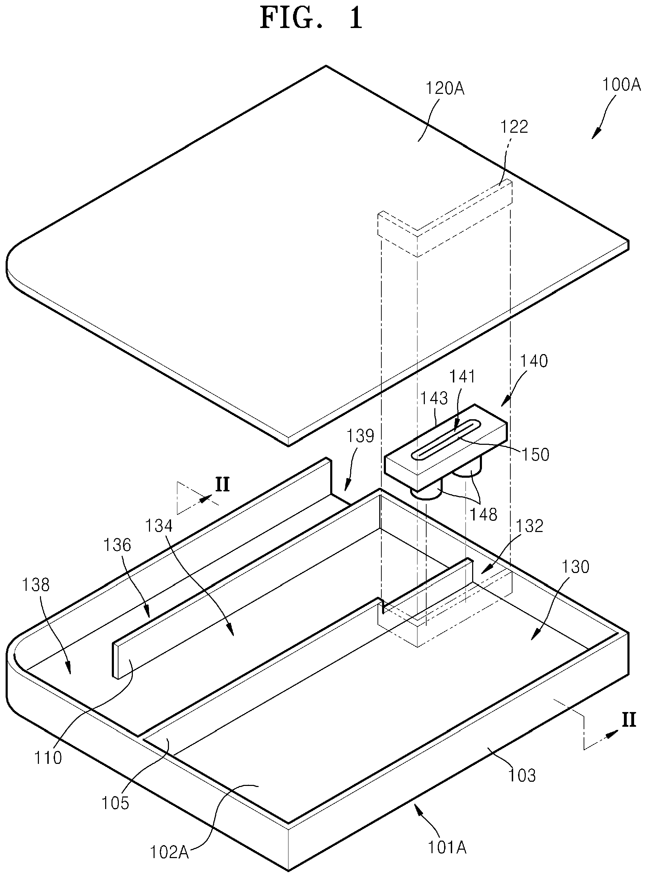

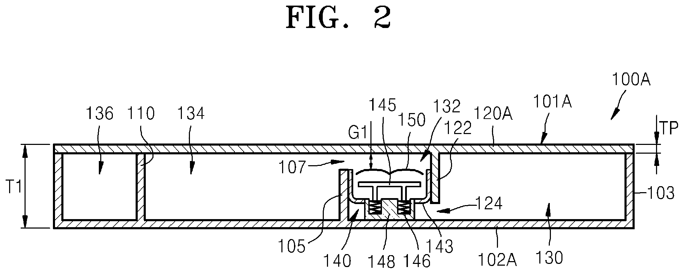

FIG. 1 is an exploded perspective view of a woofer 100A according to an exemplary embodiment of the present invention. FIG. 2 is a cross-sectional view of the woofer 100A of FIG. 1 taken along a line II-II according to an exemplary embodiment of the present invention.

Referring to FIGS. 1 and 2, the woofer 100A of the exemplary embodiment includes first and second plates 102A and 120A that are in parallel spaced apart from each other, an enclosure 101A including an external wall 103 that is an external boundary, and a speaker unit 140 that is mounted in the enclosure 101A and generates sound vibrations. The first plate 102A and the external wall 103 are integrally formed so that a base is formed. The second plate 120A is coupled to the base so that the enclosure 101A is formed.

The inner space of the enclosure 101A is divided into a rear chamber 130, a speaker unit chamber 132, a front chamber 134, and a duct 136 according to first through third barrier ribs 105, 122, and 110. In more detail, the first barrier rib 105 partitions the rear chamber 130, the speaker unit chamber 132, and the front chamber 134. The second barrier rib 122 partitions the speaker unit chamber 132 and the rear chamber 130. The third barrier rib 110 partitions the front chamber 134 and the duct 136. The first barrier rib 105 and the third barrier rib 110 are integrally formed with the first plate 102A, and the second barrier rib 122 is integrally formed with the second plate 120A.

Although the rear chamber 130 is not directly connected to the outside of the enclosure 101A, in order to facilitate air flow, the rear chamber 130 is adjacent to the speaker unit chamber 132 with the second barrier rib 122 disposed therebetween, with a first connection aperture 124 formed in the second barrier rib 122. The speaker unit chamber 132 is adjacent to the front chamber 134 with the first barrier rib 105 disposed therebetween, and air flow is facilitated through a second connection aperture 107 formed in the first barrier rib 105. The front chamber 134 is connected to one side of the duct 136 through a third connection aperture 138 formed in one side of the third barrier rib 110 in order to facilitate air flow, and the other side of the duct 136 is opened to the outside through a duct aperture 139. Thus, the rear chamber 130 and the speaker unit chamber 132 are spaced apart from the duct 139 by the front chamber 134.

The first connection aperture 124 and the second connection aperture 107 are not disposed in the same level between the first plate 102A and the second plate 120A. In more detail, the first connection aperture 124 is formed closer to the first plate 102A and the second connection aperture 107 is formed closer to the second plate 120A.

The speaker unit 140 is mounted in the speaker unit chamber 132 in such a manner that a front surface 141 in which sound vibration radiates faces the second plate 120A. The speaker unit 140 may be a bar type speaker. The speaker unit 140 includes a frame 143, a vibration plate 150 disposed in the frame 143 and generating sound vibration, a driving body 145 driving the vibration plate 150, and a magnet 148. If current corresponding a sound signal flows in a coil 146 winding around the driving body 145, the driving body 145 and the vibration plate 150 supported by the driving body 145 vibrate in a direction of thickness T1 of the enclosure 101A according to correlations between the driving body 145 and the vibration plate 150 and a magnet 148 and thus sound vibration radiates toward the second plate 120A. The sound vibration radiated toward the second plate 120A is reflected by the second plate 120A, passes through the second connection aperture 107, undergoes the front chamber 134 and the duct 136, and radiates to the outside of the enclosure 101A through the duct aperture 139. The sound radiates to the outside of the enclosure 101A by amplifying a bass sound bandwidth corresponding to a resonance frequency of the duct 136 according to a Helmholtz resonance effect.

A gap G1 between the front surface 141 of the speaker unit 140 and an inner side surface of the second plate 120A is set to be greater than the maximum amplitude of the speaker unit 140 when the sound vibration radiates so that the speaker unit 140 does not prevent the sound vibration from radiating. Further, the gap G1 is set to be smaller than a wavelength (approximately, 1~3m) of bass sound bandwidth sound that is to be amplified so that a bass sound amplification performance can not be deteriorated. The maximum amplitude of the speaker unit 140 and the vibrating plate 150 may be about 0.6 mm. The gap G1 may be about 2 mm. The thickness TP of the first plate 102A and the second plate 120A may be about 1 mm. The thickness T1 of the woofer 101A may be about 13 mm.

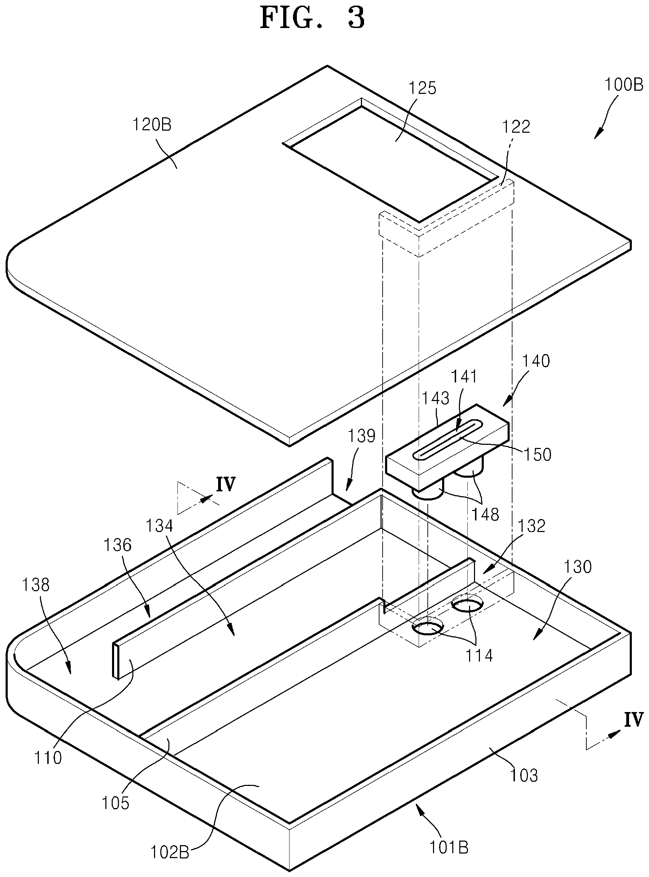

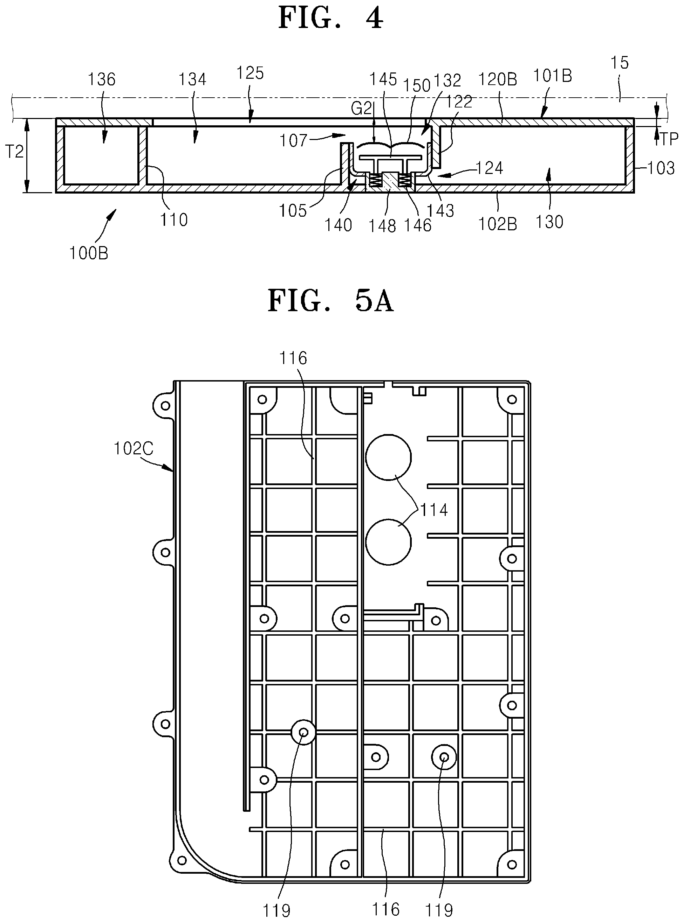

FIG. 3 is an exploded perspective view of a woofer 100B according to another exemplary embodiment of the present invention. FIG. 4 is a cross-sectional view of the woofer 100B of FIG. 3 taken along a line IV-IV according to another exemplary embodiment of the present invention. The woofer 100B of the present exemplary embodiment is quite similar to the woofer 100A of the previous embodiment and is partially different from the woofer 100A. Like reference numerals denote like elements between the woofers 100A and 100B and thus the same descriptions thereof will not be repeated.

Referring to FIGS. 3 and 4, the woofer 100B of the present exemplary embodiment includes first and second plates 102 B and 120 B that are in parallel spaced apart from each other, an enclosure 101B including the external wall 103 that is an external boundary, and the speaker unit 140 that is mounted in the enclosure 101B. The inner space of the enclosure 101B is divided into the rear chamber 130, the speaker unit chamber 132, the front chamber 134, and the duct 136 according to the first through the third barrier ribs 105, 122, and 110.

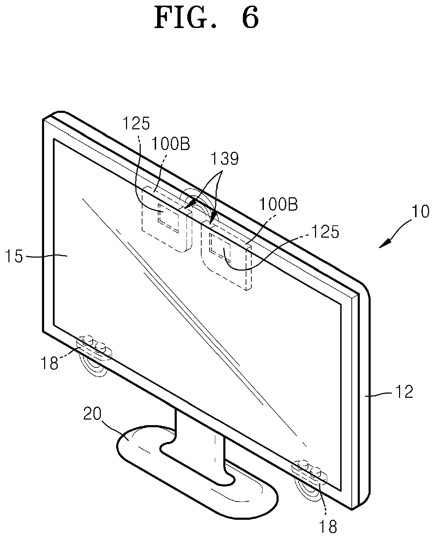

A magnet aperture 114 is formed in a portion of the first plate 102B that overlaps the speaker unit chamber 132. The magnet 148 of the speaker unit chamber 132 is inserted into the magnet aperture 114. A sound dispersion aperture 125 that disperses sound vibration generated in the speaker unit 140 is formed in a portion of the second plate 120B that overlaps the speaker unit chamber 132 and the front chamber 134. For example, the sound dispersion aperture 125 may be closed by an element of a main body 12 of an electronic device 10 when the woofer 100B is attached to the electronic device 10 as shown in FIG. 6. If the electronic device 10, for example, is a digital TV, the element of the main body 12 may be a flat display panel 15 that is wider and flatter than the second plate 120B, and the sound dispersion aperture 125 may be closed by a rear surface of the flat display panel 15.

The sound vibration radiated in the speaker unit 140 travels forward the sound dispersion aperture 125 of the second plate 120B, is reflected by the rear surface of the flat display panel 15, undergoes the front chamber 134 and the duct 136 through the second connection aperture 107, and radiates to the outside of the enclosure 101B by amplifying a bass sound bandwidth through the duct aperture 139.

A gap G2 between the front surface 141 of the speaker unit 140 and the rear surface of the flat display panel 15, i.e. an inner side surface of the flat display panel 15 facing the enclosure 101B, is set to be greater than the maximum amplitude of the speaker unit 140 when the sound vibration radiates so that the speaker unit 140 does not prevent the sound vibration from radiating. Further, the gap G2 is set to be smaller than a wavelength (approximately, 1~3 m) of bass sound bandwidth sound that is to be amplified so that a bass sound amplification performance can not be deteriorated. The maximum amplitude of the speaker unit 140 and the vibrating plate 150 may be about 0.6 mm. The gap G2 may be about 2 mm. Since the woofer 100B of the present exemplary embodiment further includes the magnet aperture 114 and the sound dispersion aperture 125 compared to the woofer 100A of the previous exemplary embodiment, a gap of the first plate 102B and the second plate 120B may be reduced to the thickness 2TP of the thickness of the first plate 102B and the second plate 120B. Thus, the thickness T2 of the woofer 100B may be smaller than the thickness T1 of the woofer 100A.

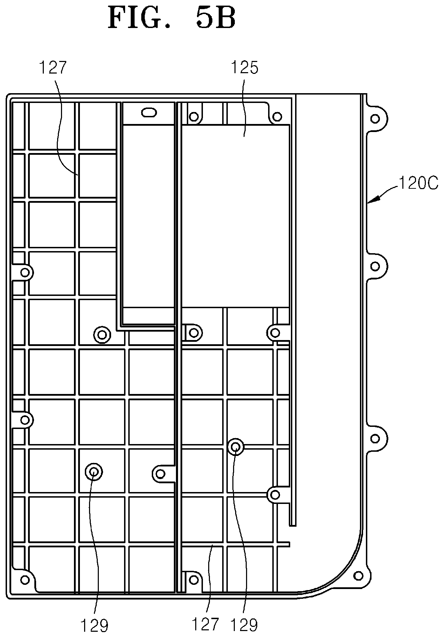

FIG. 5A is a plan view of an inner side surface of a first plate 102C included in an enclosure according to an exemplary embodiment of the present invention. FIG. 5B is a plan view of an inner side surface of a second plate 120C included in an enclosure according to an exemplary embodiment of the present invention. The first plate 102C and second plate 120C of the present exemplary embodiment are quite similar to the first plate 102B and first plate 120B of the previous exemplary embodiment and are partially different from the first plate 102B and first plate 120B. Like reference numerals denote like elements between the first plate 102C and second plate 120C and the woofer 100B and thus the same descriptions thereof will not be repeated.

Referring to FIGS. 5A and 5B, the first plate 102C and first plate 120C include a reinforcement unit that inhibits vibration thereof caused by sound vibration and reinforces rigidity. In more detail, two ribs 116 and 127 that protrude in the form of a check are formed in the inner side surfaces of the first plate 102C and first plate 120C. Further, when the speaker unit 140 radiates the sound vibration (see FIGS. 3 and 4), two screw holes 119 and 129 used for screw locking are formed at an anti-node point in which a great vibration is detected, which prevents a reduction in a sound pressure level caused by vibration of the anti-node point. The anti-node point can be experimentally found.

FIG. 6 is a perspective view of an electronic device 10 according to an exemplary embodiment of the present invention. The electronic device 10 of the present exemplary embodiment is a digital TV but the present invention is not limited thereto. Referring to FIG. 6, the electronic device 10 includes the main body 12 that performs a previously established function and a pair of woofers 100B attached to the main body 12. If the electronic device 10 is the digital TV, the main body 12 performs a function of visually displaying a recognizable scene and audibly radiating recognizable sound. The main body 12 includes the flat display panel 15 that displays a scene, a bar type speaker 18 disposed in the lower portion of the flat display panel 15, and a support 20 that supports the flat display panel 15.

The woofer 100B is attached to the main body 12 so that the sound dispersion aperture 125 faces the main body 12, and the sound dispersion aperture 125 may be closed by the flat display panel 15. The speaker unit 140 radiates the sound vibration through the duct aperture 139 opened upward (see FIGS. 3 and 4).

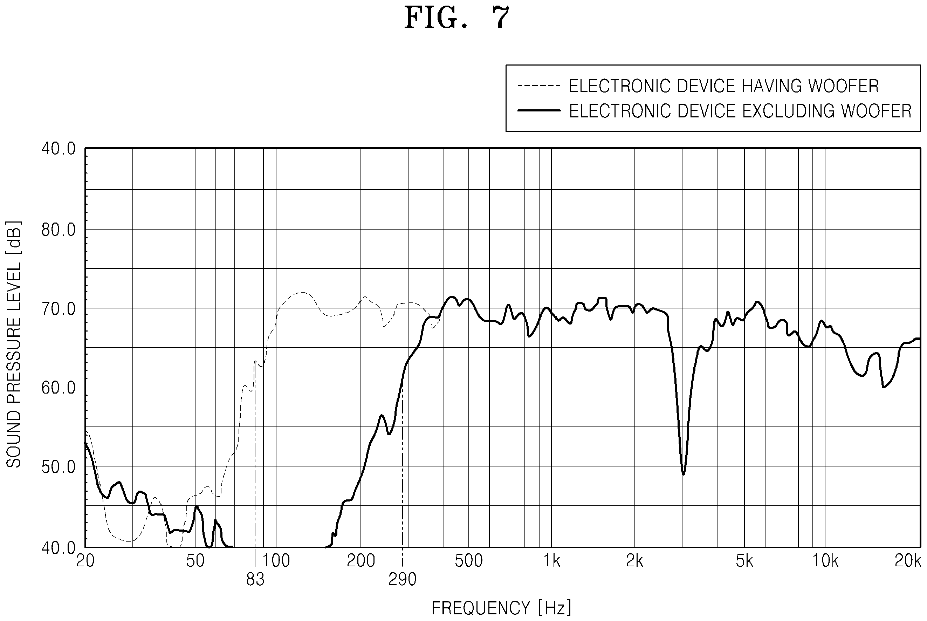

FIG. 7 is a graph of a sound pressure level of the electronic device 10 of FIG. 6 according to an exemplary embodiment of the present invention. Referring to FIG. 7, the sound pressure level is measured 1.5 m in front of the electronic device 10 and is parametrically equalized (PEQ). A broken line indicates a sound pressure level of the electronic device 10 having a woofer. A solid line indicates a sound pressure level of the electronic device 10 excluding the woofer 100B.

The electronic device 10 excluding the woofer 100B has a 6dB roll-off frequency of 290 Hz in which the sound pressure level rapidly falls by 6 dB in a low frequency band, whereas the electronic device 10 having the woofer has a 6dB roll-off frequency of 83 Hz and thus a frequency of about 200 Hz is reduced. Therefore, sound is amplified by the frequency of about 200 Hz in the bass sound bandwidth.

While the present invention has been particularly shown and described with reference to preferred exemplary embodiments thereof, it will be understood by one of ordinary in the art that various changes in form and details may be made therein without departing from the scope of the invention as defined by the appended claims.

## Claims

1. A woofer comprising:
an enclosure (101A) comprising a rear chamber (130), a speaker unit chamber (132) disposed adjacent to the rear chamber (130) and connected to the rear chamber (130) such that air flows between the rear chamber (130) and the speaker unit chamber (132) via a first connection aperture (124) formed in a second barrier rib (122), a front chamber (134) disposed adjacent to the speaker unit chamber (132) and connected to the speaker unit chamber (132) such that air flows between the front chamber (134) and the speaker unit chamber (132) via a second connection aperture (107) formed in a first barrier rib (105), and a duct (136) having a first side connected to the front chamber (134) such that air flows between the duct (136) and the front chamber (134) via a third connection aperture (138) formed in a third barrier rib (110), and a second side opened to an outside, wherein the rear chamber (130), the speaker unit chamber (132), the front chamber (134), and the duct (136) are disposed between a first plate (102A) and a second plate (120A) that are spaced apart from each other; and
a speaker unit (140), which generates a sound and is disposed in the speaker unit chamber (132) such that a front surface faces the second plate (120A),
wherein the sound passes through the front chamber (134) and the duct (136),
the rear chamber (130), the speaker unit chamber (132), the front chamber (134), and the duct (136) are arranged side by side in a direction perpendicular to a thickness direction which is a direction from the first plate (102A) to the second plate (120A), and
the sound is radiated to the outside of the enclosure (101A) by amplifying a bass sound bandwidth corresponding to a resonance frequency of the duct (136) according to a Helmholtz resonance effect.

2. The woofer of claim 1, wherein the rear chamber (130) and the speaker unit chamber (132) are connected to each other in order for air to flow through the first connection aperture (124) formed closer to the first plate than the second plate in the second barrier rib (122) that partitions the rear chamber and the speaker unit chamber, and
wherein the front chamber (134) and the speaker unit chamber are connected to each other in order for air to flow through the second connection aperture (107) formed closer to the second plate than the first plate in the first barrier rib (105) that partitions the front chamber and the speaker unit chamber.

3. The woofer of claim 1, wherein a gap between the front surface of the speaker unit and the inner side surface of the second plate is greater than the maximum vibration amplitude of the speaker unit.

4. The woofer of claim 1, wherein an aperture (125) that disperses the sound vibration generated by the speaker unit is formed in a portion of the second plate that overlaps the speaker unit chamber and the front chamber.

5. The woofer of claim 4, wherein, if an aperture of the second plate is closed by a virtual flat plate wider than the second plate, a gap between the front surface of the speaker unit and the inner side surface of the virtual flat plate is greater than the maximum vibration amplitude of the speaker unit.

6. The woofer of claim 1, wherein an aperture (114) is formed in a portion of the first plate that overlaps the speaker unit chamber, and the speaker unit is partially inserted into the aperture formed in the first plate.

7. The woofer of claim 1, wherein the first plate or the second plate comprises a reinforcement unit that inhibits a vibration, caused by the sound vibration, and reinforces rigidity.

8. The woofer of claim 1, wherein the rear chamber and the speaker unit chamber are spaced apart from the duct by the front chamber.

9. An electronic device comprising:
a main body performing a previously established function; and a woofer attached to the main body of any one of claims 1 through 8.

## Patentansprüche

1. Woofer, umfassend:
ein Gehäuse (101A), das eine hintere Kammer (130), eine Lautsprechereinheitskammer (132), die benachbart zu der hinteren Kammer (130) angeordnet und mit der hinteren Kammer (130) verbunden ist, so dass Luft über eine erste Verbindungsöffnung (124), die in einer zweiten Barriererippe (122) gebildet ist, zwischen der hinteren Kammer (130) und der Lautsprechereinheitskammer (132) fließt, eine vordere Kammer (134), die benachbart zu der Lautsprechereinheitskammer (132) angeordnet und mit der Lautsprechereinheitskammer (132) verbunden ist, so dass Luft über eine zweite Verbindungsöffnung (107), die in einer ersten Barriererippe (105) gebildet ist, zwischen der vorderen Kammer (134) und der Lautsprechereinheitskammer (132) fließt, und einen Schacht (136) mit einer ersten Seite, die derart mit der vorderen Kammer (134) verbunden ist, dass Luft über eine dritte Verbindungsöffnung (138), die in einer dritten Barriererippe (110) gebildet ist, zwischen dem Schacht (136) und der vorderen Kammer (134) fließt, und mit einer zweiten Seite umfasst, die zu einer Außenseite geöffnet ist, wobei die hintere Kammer (130), die Lautsprechereinheitskammer (132), die vordere Kammer (134) und der Schacht (136) zwischen einer ersten Platte (102A) und einer zweiten Platte (120A) angeordnet sind, die voneinander beabstandet sind; und
eine Lautsprechereinheit (140), die Schall generiert und in der Lautsprechereinheitskammer (132) so angeordnet ist, dass eine vordere Oberfläche zu der zweiten Platte (120A) weist,
wobei der Schall die vordere Kammer (134) und den Schacht (136) durchläuft,
die hintere Kammer (130), die Lautsprechereinheitskammer (132), die vordere Kammer (134) und der Schacht (136) nebeneinander in einer Richtung senkrecht zu einer Dickenrichtung angeordnet sind, die eine Richtung von der ersten Platte (102A) zu der zweiten Platte (120A) ist, und
der Schall an die Außenseite des Gehäuses (101A) abgestrahlt wird, indem eine Bassschallbandbreite, die einer Resonanzfrequenz des Schachts (136) entspricht, gemäß einem Helmholtz-Resonanzeffekt verstärkt wird.

2. Woofer nach Anspruch 1, wobei die hintere Kammer (130) und die Lautsprechereinheitskammer (132) miteinander verbunden sind, damit Luft durch die erste Verbindungsöffnung (124), die näher an der ersten Platte als an der zweite Platte gebildet ist, in der zweiten Barriererippe (122) fließen kann, welche die hintere Kammer und die Lautsprechereinheitskammer teilt, und
wobei die vordere Kammer (134) und die Lautsprechereinheitskammer miteinander verbunden sind, damit Luft durch die zweite Verbindungsöffnung (107), die näher an der zweiten Platte als an der ersten Platte gebildet ist, in der ersten Barriererippe (105) fließen kann, welche die vordere Kammer und die Lautsprechereinheitskammer teilt.

3. Woofer nach Anspruch 1, wobei ein Spalt zwischen der vorderen Oberfläche der Lautsprechereinheit und der Innenseitenoberfläche der zweiten Platte größer als die maximale Schwingungsamplitude der Lautsprechereinheit ist.

4. Woofer nach Anspruch 1, wobei eine Öffnung (125), welche die durch die Lautsprechereinheit generierte Schallschwingung verbreitet, in einem Abschnitt der zweiten Platte gebildet ist, welcher die Lautsprechereinheitskammer und die vordere Kammer überlappt.

5. Woofer nach Anspruch 4, wobei, falls eine Öffnung der zweiten Platte durch eine virtuelle flache Platte verschlossen wird, die breiter als die zweite Platte ist, ein Spalt zwischen der vorderen Oberfläche der Lautsprechereinheit und der Innenseitenoberfläche der virtuellen flachen Platte größer als die maximale Schwingungsamplitude der Lautsprechereinheit ist.

6. Woofer nach Anspruch 1, wobei eine Öffnung (114) in einem Abschnitt der ersten Platte gebildet ist, welcher die Lautsprechereinheitskammer überlappt, und wobei die Lautsprechereinheit teilweise in die Öffnung eingesetzt ist, die in der ersten Platte gebildet ist.

7. Woofer nach Anspruch 1, wobei die erste Platte oder die zweite Platte eine Verstärkungseinheit umfasst, die eine Schwingung hemmt, die durch Schallschwingung bewirkt wird, und die die Steifheit verstärkt.

8. Woofer nach Anspruch 1, wobei die hintere Kammer und die Lautsprechereinheitskammer durch die vordere Kammer von dem Schacht beabstandet sind.

9. Elektronische Vorrichtung, umfassend:
einen Hauptkörper, der eine zuvor eingerichtete Funktion durchführt; und
einen Woofer, der an dem Hauptkörper befestigt ist, nach einem der Ansprüche 1 bis 8.

## Revendications

1. Haut-parleur de graves comprenant :
une enceinte (101A) comprenant une chambre arrière (130), une chambre d'unité de haut-parleur (132) disposée de manière adjacente à la chambre arrière (130) et reliée à la chambre arrière (130) de telle sorte que l'air circule entre la chambre arrière (130) et la chambre d'unité de haut-parleur (132) via une première ouverture de liaison (124) formée dans une deuxième nervure de barrière (122), une chambre avant (134) disposée de manière adjacente à la chambre d'unité de haut-parleur (132) et reliée à la chambre d'unité de haut-parleur (132) de telle sorte que l'air circule entre la chambre avant (134) et la chambre d'unité de haut-parleur (132) via une deuxième ouverture de liaison (107) formée dans une première nervure de barrière (105), et un conduit (136) ayant un premier côté relié à la chambre avant (134) de telle sorte que l'air s'écoule entre le conduit (136) et la chambre avant (134) via une troisième ouverture de liaison (138) formée dans une troisième nervure de barrière (110), et un second côté ouvert vers l'extérieur, la chambre arrière (130), la chambre d'unité de haut-parleur (132), la chambre avant (134) et le conduit (136) étant disposés entre une première plaque (102A) et une seconde plaque (120A) qui sont espacées l'une de l'autre ; et
une unité de haut-parleurs (140), qui génère un son et est disposée dans la chambre d'unité de haut-parleurs (132) de telle sorte qu'une surface avant est tournée vers la seconde plaque (120A),
le son passant par la chambre avant (134) et le conduit (136),
la chambre arrière (130), la chambre d'unité de haut-parleur (132), la chambre avant (134) et le conduit (136) étant agencés côte à côte dans une direction perpendiculaire à une direction d'épaisseur qui est une direction allant de la première plaque (102A) à la seconde plaque (120A), et
le son étant rayonné vers l'extérieur de l'enceinte (101A) en amplifiant une bande passante de son de basse correspondant à une fréquence de résonance du conduit (136) selon un effet de résonance de Helmholtz.

2. Haut-parleur de graves selon la revendication 1, la chambre arrière (130) et la chambre d'unité de haut-parleur (132) étant reliées l'une à l'autre afin que l'air circule à travers la première ouverture de liaison (124) formée plus près de la première plaque que de la seconde plaque dans la deuxième nervure de barrière (122) qui sépare la chambre arrière et la chambre d'unité de haut-parleur, et
la chambre avant (134) et la chambre d'unité de haut-parleur étant reliées l'une à l'autre afin que l'air circule à travers la deuxième ouverture de liaison (107) formée plus près de la seconde plaque que de la première plaque dans la première nervure de barrière (105) qui sépare la chambre avant et la chambre d'unité de haut-parleur.

3. Haut-parleur de graves selon la revendication 1, un espace entre la surface avant de l'unité de haut-parleur et la surface latérale intérieure de la seconde plaque étant supérieur à l'amplitude de vibration maximale de l'unité de haut-parleur.

4. Haut-parleur de graves selon la revendication 1, une ouverture (125) qui disperse la vibration sonore générée par l'unité de haut-parleur étant formée dans une partie de la seconde plaque qui chevauche la chambre d'unité de haut-parleur et la chambre avant.

5. Haut-parleur de graves selon la revendication 4, si une ouverture de la seconde plaque est fermée par une plaque plane virtuelle plus large que la seconde plaque, un espace entre la surface avant de l'unité de haut-parleur et la surface latérale intérieure de la plaque plane virtuelle étant supérieur à l'amplitude de vibration maximale de l'unité de haut-parleur.

6. Haut-parleur de graves selon la revendication 1, une ouverture (114) étant formée dans une partie de la première plaque qui chevauche la chambre d'unité de haut-parleur, et l'unité de haut-parleur étant partiellement insérée dans l'ouverture formée dans la première plaque.

7. Haut-parleur de graves selon la revendication 1, la première plaque ou la seconde plaque comprenant une unité de renforcement qui inhibe une vibration, causée par la vibration sonore, et renforce la rigidité.

8. Haut-parleur de graves selon la revendication 1, la chambre arrière et la chambre d'unité de haut-parleur étant espacées du conduit par la chambre avant.

9. Dispositif électronique comprenant :
un corps principal réalisant une fonction préalablement établie ; et
un haut-parleur de graves fixé au corps principal selon l'une quelconque des revendications 1 à 8.
